# EUROPEAN PATENT SPECIFICATION

(11) **EP 2 209 384 B1**
(45) Date of publication and mention of the grant of the patent: **10.08.2011**
(21) Application number: 08851355.1
(22) Date of filing: 03.11.2008
(51) Int. Cl.: A23C 11/10, A23C 11/06

(54) **FERMENTED SOY-BASED BEVERAGE**
AUF FERMENTIERTEM SOJA BASIERENDES GETRÄNK
BOISSON À BASE DE SOJA FERMENTÉE

(30) Priority: 23.11.2007 EP 07121396
(43) Date of publication of application: 28.07.2010
(73) Proprietor: Unilever N.V., 3013 AL Rotterdam (NL); Unilever PLC, London EC4Y 0DY (GB)
(72) Inventor: BATENBURG, Amir, Maximiliaan, NL-3133 AT Vlaardingen (NL); BECKMANN, Christoph, Hendrik, NL-3133 AT Vlaardingen (NL); SANDERS, Jan, Willem, NL-3133 AT Vlaardingen (NL)
(74) Representative: Wurfbain, Gilles L.
(86) International application number: PCT/EP2008/064861
(87) International publication number: WO 2009/065722

(56) References cited:
- EP-A- 0 521 331
- EP-A- 1 649 760
- US-B1- 6 599 543
- DATABASE WPI Week 200556 Thomson Scientific, London, GB; AN 2005-547061 XP002477391 & JP 2005 218390 A (TAO Y Y) 18 August 2005 (2005-08-18)
- DATABASE WPI Week 200776 Thomson Scientific, London, GB; AN 2007-812700 XP002477440 & RU 2 307 514 C1 (LANINA V V) 10 October 2007 (2007-10-10)
- DATABASE WPI Week 200715 Thomson Scientific, London, GB; AN 2007-146184 XP002477392 & JP 2007 014303 A (KIKKOMAN CORP) 25 January 2007 (2007-01-25)

## Description

### Field of the Invention

The present invention relates to the field of fermented (or cultured) soy-containing products, especially fermented soy-based beverages.

### Background of the invention

Consumers have become more knowledgeable about protein and its role in a healthy diet. This new understanding has had a profound effect, stimulating consumer interest and demand for healthier beverages that are fortified with protein. Because beverages are a convenient way to incorporate protein into the diet, manufacturers continue to formulate new products in an effort to make protein more accessible to a wider group of consumers.

The two most popular beverage proteins are milk protein and soy protein, and their various isolate derivatives. According to the U.S. Food and Drug Administration, the consumption of food products rich in soy protein can reduce cholesterol, enhance athletic performance, and even aid in the battle against diabetes. In addition, interest for milk replacement by soy protein has increased in view of, on the one hand, issues in relation to over-sensitivity and/or intolerance towards milk constituents experienced by growing numbers of consumers and, on the other hand, elevated milk protein prices and supply issues that some manufacturers are experiencing relative to this commodity. Soy proteins have been proposed to replace milk proteins, either partially or totally, depending on the system, and dairy-like products have been developed based entirely on soy protein.

In view of soy protein's documented health benefits it is desirable to incorporate substantial quantities of soy protein in beverages. However, incorporation of soy protein into e.g. beverages presents several challenges. The incorporation of soy protein in beverages is known to impart a noticeable aftertaste and a distinctive "beany" taste. Different types of processes to isolate soy protein have been proposed which aim to remove these undesirable (off-) flavour-notes. Unfortunately, however, it is almost impossible to completely remove the typical soy "off-notes" from sources of soy protein such as soy concentrates and soy isolates. In addition, in most product applications the intensity of soy off-notes increases during processing and storage, probably as a result of the formation of off-flavour compounds from precursor molecules.

US 3,364,034 describes a method for removing characteristic flavour and/or odour from vegetable protein materials to provide a substantially bland product, comprising: inoculating said protein materials with bacteria selected from the group consisting of *Lactobacillus lactis, Lactobacillus bulgaricus, Lactobacillus acidophilus, Leuconostoc citrovorum, Pediococcus cerivisiae, Pseudomonas ovalis, Pseudomonae fragi, Aerobacter aerogenes, Streptococcus lactis,* incubating for 16-144 hours under conditions conducive to bacterial growth; and terminating said bacterial growth after said material is rendered substantially bland.

US 4,664,919 describes a process for producing yogurt-like food, comprising fermenting soy milk with *Streptococcus sojalactis.* It is observed in the US patent that the yogurt-like food so obtained does not have peculiar 'green'

smell of soy milk and that it has a good taste. It is further stated that the aforementioned *Streptococcus* strain is capable of removing the 'green' smell of soybeans and that the amount of diacetyl and acetone formed is larger than that of other lactic acid bacteria. Data provided about the *Streptococcus sojalactis* show that the microorganism is capable of growing at temperatures in the range of 30-40 °C, but not at 20 °C or less or at temperatures of 45 °C or higher. US 6,599,543 relates to process for preparing a fermented soybean milk comprising: contacting dehulled and dehypocotyl whole soybeans with warm or hot water; removing warm or hot water-soluble component from the soybeans; pulverizing the soybeans to make a slurry; removing insoluble component from the slurry to make a soybean milk, inoculating a lactic acid bacterium of the genus *Bifidobacterium, Lactobacillus bulgaricus* and one strain selected from the group consisting of *Lactobacillus acidophilus* and *Lactobacillus casei* into the soybean milk, adding one or more saccharides which can be utilized by the lactic acid bacterium to the soybean milk, and fermenting the soybean milk to produce the fermented soybean milk. The removal of hypocotyl from the soybeans as taught by US 6,599,543 is laborious and costly.

EP-A 0 386 817 describes a process of preparing a fermented soymilk, which comprises the steps of:
a) inoculating soymilk with an exocellular polysaccharide-forming lactic acid bacterium;
b) incubating the inoculated soymilk; and
c) recovering the fermented product.

Example 1 of the European patent application describes how 100 ml of soybean milk containing 0.5 wt.% of a added lactose was fermented with a culture of exocellular polysaccharide-forming lactic acid bacteria (*Streptococcus cremoris*) for 15 hours at 25 °C, after which the pH had dropped to 4.6. After fermentation, a product was obtained with a highly viscous consistency and practically no beany flavour.

EP-A 1 145 648 describes a method of preparing a lactic acid fermented soy proteinaceous food ingredient with reduced levels of flatulence inducing oligosaccharides and conserved levels of isoflavones, said method comprising:
a) providing an aqueous crude soy material containing soy protein, flatulence-inducing oligosaccharides, and isoflavones; and
b) simultaneously treating the aqueous crude soy material with (1) a source of glycosidase activity that is effective to hydrolyze the flatulence-inducing oligosaccharides to fermentable saccharides and (2) a lactic acid producing culture that ferments the fermentable saccharides.

Example 2 describes how a 30% solids slurry of defatted soy flour in water was simultaneously inoculated with about 5 percent of a lactic acid culture (mixture of *Lactococus lactis* and *Streptococcus cremoris*) and about 0.01 percent of α-galactosidase enzyme. The inoculated slurry was held at 35 °C for 4 hours, during which time the pH dropped from 6.6 to 5.3.

JP-A-2004-261003 describes a method of preparing fermented soybean milk by fermenting soybean milk and by adding palatinose (isomaltulose) before, during or after fermentation. In the Japanese application it is observed that the grass smell inherent to soybean milk can be reduced to a certain extent by fermenting soybean milk with a combination of a lactic acid bacterium and a bifidobacterium, but that satisfactory results cannot always be established, in particular due to the taste and smell of acetic acid, which is metabolic product of the fermentation. Palatinose is incorporated in the fermented soybean milk to suppress the unpleasant taste, fermentation smell, harshness and acetic acid smell generated in the course of lactic acid fermentation or acetic acid fermentation. The examples of the Japanese patent application describe the preparation of fermented drink yogurts from a soybean milk to which isomaltulose and sucrose are added prior and/or after fermentation. In the examples a starter culture is used that comprises *Lactobacillus delbrueckii* subsp. *Bulgaricus* and *Streptoccus thermophilus.* The drink yogurts disclosed in the Japanese application are extremely sweet as they contain more than 8 wt.% of added disaccharide (isomaltulose and/or sucrose). JP 2004003144 describes fermentation of soy milk at 25-35 °C for 12-20 hours using a starter culture comprising *Lactococcus lactis lactis, Lactococcus lactis cremoris, Lactococcus lactis lactis diacetylactis, Lactobacillus casei* or *Lactobacillus plantarum.*

RU 20060106394 describes the preparation of a yoghurt-type fermented product by fermenting soy milk containing 1.5-3 wt.% protein and 10-12.5 wt.% solids for 6-8 hours at 37-38 °C. The aim is to obtain a hypoallergenic product with high bacterial activity (probiotic) that can correct the microflora of the gastrointestinal tract and that has improvded dietary and prophylactic properties. The method described in the Russian patent application comprises first adding a starter culture containing *Bifidobacterium bifidum* 791 and subsequently adding, after 1-2 hours, *Lactobacillus fermentum* 2953.

### Summaryof the Invention

The inventors have developed a method of fermenting a soy protein containing substrate that effectively removes off-flavour notes originating from the soy component and additionally delivers a very pleasant taste. The method of the present invention utilises a culture containing lactic acid bacteria strain(s) selected from the group consisting of species of the genus *Lactococcus,* species of the genus *Leuconostoc,* mesophilic strains of the genus *Lactobacillus* having an optimum growth temperature below 35 °C and combinations thereof, which LAB strain is capable of metabolising one or more C₅-C₉ n-alkanals and/or *trans*-2-hexenal and that additionally is capable of producing diacetyl and/or acetaldehyde. The substrate employed in the present method is a pasteurised or sterilised aqueous liquid containing 0.5-8 wt.% of dissolved soy protein, 0-0.2 wt.% of dairy protein and less than 24 wt.% of solids. In the present method, after inoculation, the substrate is incubated at a temperature of 20-40 °C for a relatively short period of 0.5-11 hours to yield a fermented product with excellent taste, wherein at a temperature of 7°C the fermented product has a viscosity of less than 50 mPa.s at 100 s⁻¹ and wherein during fermentation lactate concentration increases by not more than 600 ppm.

C₅-C₉ n-alkanals and *trans*-2-hexenal are flavour molecules that are believed to be largely responsible for the 'beany' off-flavour often found in soy based products. The flavour molecules diacetyl and acetaldehyde are often associated with fermented dairy products such a yogurt, butter and short period of 0.5-11 hours to yield a fermented product with excellent taste.

C₅-C₉ n-alkanals and *trans-*2-hexenal are flavour molecules that are believed to be largely responsible for the 'beany' off-flavour often found in soy based products. The flavour molecules diacetyl and acetaldehyde are often associated with fermented dairy products such a yogurt, butter and butter milk. The inventors have discovered that by fermenting the present soy protein containing substrate with a *Lactococcus, Leuconostoc* or mesophilic *Lactobacillus,* it is possible to remove typical soy-related off-notes and at the same time to introduce pleasant flavour notes that enhance the quality of the final food or beverage in which the fermented substrate is applied. In order to obtain a fermented substrate with significantly reduced off-flavour notes and a pleasant flavour, the fermentation conditions must be controlled so that:
i. the concentration of at least one C₅-C₉ n-alkanal and/or of 2-trans-hexenal decreases by at least 30%;
ii. the concentration of diacetyl increases with at least 0.2 ppm and/or the concentration of acetaldehyde increases with at least 0.1 ppm.

As mentioned before, the method of the present invention offers the advantage that it enables the effective removal of soy off-notes as well as the preparation of fermented substrates with a desirable flavour profile that is similar to that of fermented dairy products, such as yogurt and fermented dairy drinks. Unlike the process taught by US 6,599,543, the present method does not require that the soy protein in the substrate is derived from soybeans from which the hypocotyl has been removed.

### Detailed Description of the Invention

Accordingly, the present invention relates to method of fermenting a soy protein containing substrate, said method comprising:
- providing a pasteurised or sterilised aqueous liquid containing 0.5-8 wt.% of dissolved soy protein, 0-0.2 wt.% of dairy protein and less than 24 wt.% of solids;
- inoculating the pasteurised or sterilised liquid with a culture comprising a lactic acid bacteria strain selected from the group consisting of species of the genus *Lactococcus,* species of the genus *Leuconostoc,* mesophilic strains of the genus *Lactobacillus* having an optimum growth temperature below 35 °C and combinations thereof;
- fermenting the inoculated aqueous liquid by incubation at a temperature in the range of 20-40 °C for 0.5-11 hours to obtain a fermented product; wherein at a temperature of 7°C the fermented product has a viscosity of less than 50 mPa.s at 100 s⁻¹ and wherein during fermentation lactate concentration increases by not more than 600 ppm, and wherein during fermentation the following changes in concentrations of flavour compounds occur:
   - diacetyl concentration increases with at least 0.2 ppm and/or acetaldehyde concentration increases with at least 0.1 ppm;
   - concentration of at least one C₅-C₉ n-alkanal decreases by at least 30% and/or concentration of *trans*-2-hexenal decreases by at least 30%.

The term "lactic acid bacterium" as used herein refers to acid tolerant, non-sporulating, non-respiring rod-shaped gram positive bacilli or cocci that produce lactic acid as the major metabolic endproduct of carbohydrate fermentation. As used herein, the term "lactic acid bacterium" does not encompass *Bifidobacterium.*

A decrease in concentration of a particular substance by X% means that if the starting concentration was Y ppm, the decreased concentration equals Y(100-X)/100 ppm.

The diacetyl, acetaldehyde, alkanal and alkenal concentrations referred to in this document are determined by the analytical methods described in the examples.

As explained herein before, in order to produce a fermented product without soy off-flavour notes and a pleasant, for instance, yogurt-like or buttery flavour, the fermentation conditions in the present method are controlled so as to promote metabolisation of C₅-C₉ n-alkanals and/or *trans*-2-hexenal and simultaneous production of considerable quantities of diacetyl and/or acetaldehyde. Using the aforementioned analytical methods it is well within the skill of a person skilled in the art of food fermentation to select suitable LAB strains and to optimise the process conditions in such a way that the targeted profile (reduction of unwanted aldehydes and increase in diacetyl and/or acetaldehyde) is realised.

In the present method, during fermentation, diacetyl concentration advantageously increases with at least 0.4 ppm, most preferably by at least 0.8 ppm. Likewise, acetaldehyde concentration preferably increases with at least 0.2 ppm, most preferably by at least 0.3 ppm.

The present invention also encompasses an embodiment in which, for instance, diacetyl or acetaldehyde is added to improve the flavour of the fermented product. However, according to a particularly preferred embodiment of the present method, no diacetyl or acetaldehyde is added before, during or after fermentation. In other words, in accordance with this preferred embodiment all of the diacetyl and acetaldehyde present in the fermented product is produced during fermentation or was naturally present in one of or more of the ingredients present in the pasteurised or sterilised aqueous liquid that is used as substrate in the present fermentation.

The fermented product obtained in the present method typically contains at least 0.4 ppm, more preferably at least 0.8 ppm of diacetyl. The diacetyl concentration in the fermented product usually does not exceed 40 ppm.

The amount of acetaldehyde in the fermented product advantageously is at least 0.2 ppm, most preferably at least 0.3 ppm. The acetaldehyde content of the fermented product typically does not exceed 40 ppm.

The inventors have found that it is feasible to achieve very significant reductions in n-aldehyde levels during fermentation. According to a preferred embodiment, during fermentation n-pentanal concentration, n-hexanal concentration, n-heptanal concentration, n-octanal and/or n-nonanal concentration decreases by at least 50%, more preferably by at least 60%, even more preferably by at least 70% and most preferably by at least 80%.

According to one particularly preferred embodiment, during fermentation the n-hexanal concentration decreases by at least 50%, more preferably by at least 70% and most preferably by at least 80%. According to another preferred embodiment, during fermentation 2-trans-hexenal concentration decreases by at least 50%, preferably by at least 70%, most preferably by at least 80%.

As illustrated in the examples, in the present method the concentration of a range of undesirable aldehydes can be reduced dramatically by the fermentation step. Hence, in a preferred embodiment, during fermentation at least 3, more preferably at least 4 and most preferably at least 5 aldehydes selected from the group consisting of n-pentanal, n-hexanal, n-heptanal, n-octanal, n-nonanal and 2-trans-hexenal are reduced by at least 30%, more preferably by at least 50% and most preferably by at least 70%.

The inventors have found that the present method can advantageously be employed to substantially reduce the level of 2-methylbutanal and 3-methylbutanal. Sources of soy protein usually contain 2-methylbutanal and 3-methylbutanal in concentrations that are well above the so called flavour threshold level. In many soy products, the typical "cereal" and/or "malty" flavour contribution of 2-methylbutanal and 3-methylbutanal is highly undesirable. Consequently, in accordance with a particularly preferred embodiment of the present method, during fermentation concentration of 2-methylbutanal and/or 3-methylbutanal decreases by at least 25%, more preferably by at least 40 % and most preferably by at least 60%.

Although the present method employs a culture comprising a lactic acid produced strain, the process is operated in such a way that during fermentation lactate concentration increases by not more than 600 ppm. In accordance with another preferred embodiment, during fermentation pH decreases by not more than 1.5 pH unit, more preferably by not more than 1.2 pH unit and most preferably by not more than 1.0 pH. Naturally, the fermented product may be acidified by addition of e.g. lactic acid or citric acid in order to improve taste and/or microbiological stability. The term "lactate" as used herein encompasses lactic acid as well as edible salts of lactic acid. The lactate concentration in the fermented product is suitably determined by the methodology described in the examples. The solids content of the pasteurised or sterilised liquid that is used as a substrate in the fermentation process preferably is less than 18 wt.%, more preferably less than 15 wt.%, even more preferably less than 10 wt.%, most preferably less than 6 wt.%.

The optimum growth temperature of the LAB strain(s) employed in the present method preferably does not exceed 37 °C, most preferably it does not exceed 35 °C.

The present method advantageously utilises one or more mesophilic LAB strains. Accordingly, it is advantageous to carry out the fermentation at a mild temperature. Preferably, the fermentation is carried out at a temperature within the range of 20-35 °C, most preferably of 25-35 °C.

The duration of the fermentation step in the present method advantageously does not exceed 10 hours, more preferably it does not exceed 8 hours. Even more preferably, the duration of the fermentation step does not exceed 6 hours. As shown in the examples, it is possible to produce a fermented product with substantially reduced off-flavour and a substantial level of diacetyl and/or acetaldehyde using a fermentation time of only 4 hours.

The present method may suitably employ a variety of LAB strains, provided these strains are capable of producing diacetyl and/or acetaldehyde. Furthermore, these strains must exhibit the capability to metabolise one or more of the undesired aldehydes described herein before. Mesophilic strains of the genus *Lactobacillus* that may advantageously be employed in the present method include *Lactobacillus brevis, Lactobacillus fermentum, Lactobacillus sake* and combinations thereof. According to a particularly preferred embodiment, the culture employed for inoculation comprises a lactic acid bacteria strain selected from the group consisting of *Lactobacillus fermentum, Lactobacillus plantarum, Lactococcus lactis* subsp *lactis* (e.g. *Lactococcus lactis* subsp *lactis* biovar *diacetylactis), Lactococcus lactis* subsp *cremoris, Leuconostoc mesenteroides, Leuconostoc cremoris, Leuconostoc lactis* and combinations thereof.

The fermented product obtained by the present method preferably has a water content of at least 85 wt%, most preferably 87 wt%, based on the total weight of the fermented product.

According to another preferred embodiment, the soy protein content of the soy-based fermented beverage of the invention is within the range of 1-7 wt%, more preferably in the range of 2-6 wt.% and most preferably of 2.5-5.5 wt%, based on the total weight of the fermented soy-based beverage.

"Soy protein content", as used herein, refers to the total amount of soy protein and soy protein derived peptides contained in the fermented beverage. The fermented beverage may be based on soy protein, on soy protein hydrolysate or combinations thereof. As will be understood by the skilled person (enzymatic) hydrolysis of peptide bonds may occur during fermentation.

The substrate that is fermented in the present method, i.e. the aqueous liquid containing 0.5-8 wt.% of dissolved soy protein is preferably prepared from a soy protein source selected from the group consisting of soy isolate, soy concentrate, soy flour and combinations thereof. According to a particularly preferred embodiment, the latter soy protein sources were obtained from soy beans exhibiting very low lipoxygenase activity, e.g. a lipoxygenase activity of less than 15 kU/mg. Even more preferably the soy protein source is derived from soy beans exhibiting a lipoxygenase activity of less than 10 kU/mg, most preferably of less than 8 kU/mg. Likewise, it is advantageous to prepare the present aqueous liquid from a soy protein source having a lipoxygenase activity of less than 5 kU per gram of soy protein. Most preferably the soy protein source has a lipoxygenase activity of less than 1 kU per gram of soy protein.

Lipoxygenase activity is suitably determined spectrophotometrically by using a dye-coupling assay specific for hydroperoxides generated from linoleic acid, as fully described by Anthon and Barrett (J. Agric. Food Chem. 2001, 49, 32-37).

Typically, the soy protein employed in the preparation of the aqueous liquid containing 0.5-8 wt.% of dissolved soy protein has protein content of at least 30 wt.% and fat content of less than 40 wt.%.

The present method employs soy protein derived from soybeans that have not been dehypocotylized. Accordingly, the aforementioned soy isolate, soy concentrate and/or soy flour are advantageously derived from optionally dehulled soybeans that still comprise the hypocotyl. Most preferably the latter sources of soy protein sources are derived from dehulled soybeans that still comprise the hypocotyls.

The term "dehypocotylized soybeans" as used herein refers to soybeans from which the hypocotyl has been removed. Hypocotyl is a botanical term for a part of a germinating seedling of a seed plant. As the plant embryo grows at germination, it sends out a shoot called a radicle that becomes the primary root and penetrates down into the soil. After emergence of the radicle, the hypocotyl emerges and lifts the growing tip above the ground, bearing the embryonic leaves (called cotyledons) and the plumule that gives rise to the first true leaves. The hypocotyl is the primary organ of extension of the young plant and develops into the stem.

The present method is advantageously employed to produce a fermented aqueous liquid that can be used as a base for the production of a beverage. In accordance with this invention the fermented product obtained in the present method has a relatively low viscosity at a temperature of 7 °C of less than 50 mPa.s at 100 s⁻¹, preferably of less than 25 mPa.s at 100 s⁻¹. A viscosity of 50 mPa.s at 100 s⁻¹ means that the product is 50 times more viscous than water and about 25 times more viscous than milk. Viscosity is suitably measured with the help of a rheometer AR1000 (TA Instruments, Etten-Leur, the Netherlands), using a 40-mm diameter, 2% angle cone measuring system. A steady-state shear process should be used, increasing shear rate from 0.01 to 250/s. The measuring temperature is 7 °C and only the data point at 100 s⁻¹ is used.

In order to ensure that fermentation times can be reduced to e.g. less than 10 hours, or even less than 8 hours, it is preferred to inoculate the pasteurised or sterilised aqueous liquid with at least 10⁵, preferably at least 10⁶ and most preferably at least 10⁷ viable cells of the LAB strain (*Lactococcus, Leuconostoc* or mesophilic *Lactobacillus*) per ml. Typically, the amount of viable cells of the LAB strain employed for inoculation does not exceed 10⁸ viable cells per ml.

The fermented product obtained at the end of fermentation typically contains at least 10⁵, preferably at least 10⁶ and most preferably at least 10⁷ viable cell per ml of the LAB strain employed for inoculation.

In one embodiment of the present invention the pasteurised or sterilised aqueous liquid is fermented in a fermentation vessel, following which the fermented product is filled into containers that are subsequently sealed. In accordance with a preferred embodiment, the fermented product is pasteurised or sterilised before filling or, alternatively, it is sterilised once it is filled into a container. According to another preferred embodiment, edible acid is added to the fermented product before it is filled into containers that are subsequently sealed, and said fermented product is not pasteurised or sterilised. Typically, edible acid is added to lower the pH to less than 4.5. Examples of edible acids that can suitably be employed include lactic acid, citric acid and combinations thereof. The inventors have observed that post-acidification without pasteurisation or sterilisation yields a product that is microbiologically stable and that has an exceptionally good taste.

As explained herein before, the present method enables the preparation of a pleasant tasting beverage without using high amounts of sweetener to mask soy off-flavour notes. Thus, advantageously less than 6 wt.% of disaccharides are added before, during or after fermentation. According to a particularly preferred embodiment, the fermented product in the sealed container contains less than 5 wt.% of disaccharides, most preferably less than 4 wt.% of disaccharides. According to yet another preferred embodiment, the packaged fermented product contains less than 8 wt.% of mono- and/or disaccharides, most preferably less than 5 wt.% of mono- and/or disaccharides.

According to another embodiment, the inoculated pasteurised or sterilised liquid is filled into a container which is subsequently sealed and the fermentation actually occurs within the container.

The fermented product that is filled into the containers preferably is a liquid containing not more than 6 wt.% of protein, most preferably containing 1.0-5.0 wt.% of protein.

The pasteurised or sterilised aqueous liquid that is used as a substrate in the present method advantageously contains an added carbohydrate that can be metabolised by the LAB strain. Examples of suitable carbohydrates include: glucose, fructose, galactose, sucrose, raffinose, stachyose, lactose and combinations thereof. Typically, these fermentable carbohydrates are added in an amount of 0.2-100 g/l, most preferably of 0.5-30 g/l.

Besides a considerable amount of soy protein, the pasteurised or sterilised aqueous liquid of the present invention may contain a small quantity of milk protein, such as whey protein or casein. Preferably, the pasteurised or sterilised aqueous liquid contains no milk protein.

In the present method a variety of food ingredients and/or additives may be incorporated in the fermented product by introducing these components to the aqueous liquid prior to or after pasteurisation or sterilisation, during fermentation or after fermentation. Examples of food ingredients and additives that may suitably be incorporated include: fruit pieces; fruit preparations; sweeteners, including artificial sweeteners; oil; flavours, colourings, vitamins, minerals and fibres.

As explained herein before, JP-A-2004-261003 describes the preparation of a fermented soy-based product wherein palatinose (isomaltulose) is added prior, during or after fermentation. In the present method the pasteurised or sterilised aqueous liquid preferably does not contain isomaltulose and no isomaltulose is added prior to, during or after fermentation.

The invention is further illustrated by means of the following non-limiting examples:

### EXAMPLES

### Analytical methods

*Analysis of off-flavour volatiles by SPME followed by GC-MS:*
2 g of sample were put in a 20 ml headspace vial and sealed with an airtight cap.

Samples were analyzed by means of solid phase micro extraction. Fiber used: Carboxen/PDMS 85 µm ex. Supelco. Analyses were carried out on an Agilent GC/MS, equipped with a Gerstel CIS-4 injector and a Gerstel MPS-2 autosampler with SPME option. Column: VF-5; 50m * 0.2 mm * 0.33 µm

GC program:
- 40°C (2 min) - (3°/min) ->160°C (0 min) - (20°/min) ->250°C (2 min)
- Gas: Helium
- Flow: 1 ml/min, constant flow

SPME Sampling time: 35 min at 40°C
Desorption: 40 minutes at 170°C
Split-less time: 2 min.

*Quantitative analysis of diacetyl and acetaldehyde:*
2 g of sample were put in a 20 ml headspace vial and sealed with an airtight cap.

All samples were analyzed in duplicate.

External calibration levels were constructed by adding acetaldehyde and diacetyl to 2 g of soy base prepared according to example 1, at levels of 0, 1, 2, 4 and 10 µg/g.

Calibration lines were constructed by plotting the peak areas of ion 44 (for acetaldehyde) resp. 86 (for diacetyl) against the amount added. These calibration lines were then used to determine the amount of acetaldehyde and diacetyl in the fermented soy samples.

Samples were analyzed by means of solid phase micro extraction.

Fiber used: Carboxen/PDMS 85 µm ex. Supelco.

Analyses were carried out on an Agilent GC/MS, equipped with a Gerstel CIS-4 injector and a Gerstel MPS-2 autosampler with SPME option. Column: VF-5; 50m * 0.2 mm * 0.33 µm

GC program:
- -20°C(10 min) -(1.5°/min)->40°C(0 min)-(20°/min)->250°C (2 min)
- Gas: Helium
- Flow: 1 ml/min, constant flow

SPME Sampling time: 35 min at 40°C
Desorption: 40 minutes at 170°C
Split-less time: 2 min.

### Lipoxygenase activity:

Lipoxygenase activity was determined spectrophotometrically by using a dye-coupling assay specific for hydroperoxides generated from linoleic acid, as fully described by Anthon and Barrett (J. Agric. Food Chem. 2001, 49, 32-37).

Enzyme extracts were obtained by homogenising 100 mg of defatted soybean grindings in 20 ml of 100 mM pH 6.0 Na₂HPO₄ buffer + 1% w/v NaCl then centrifuging at 15,000 rpm at 4°C for 30 minutes and filtering the supernatant through a 0.2 µm filter.

To 500 µl of a solution of 10 mM 3-(dimethylamino)benzoic acid in 100 mM pH 6.0 Na₂HPO₄ was added 20 µl of 27 mM linoleic acid dispersed in 1.4% w/v Tween 20, and 10 µl of enzyme extract. After 5 minutes, 500 µl of a solution containing 0.2 mM 3-methyl-2-benzothiazolinone hydrazone and 0.1 mg/ml bovine haemoglobin was added. After a further 5 minutes, 500 µl of 1% w/v sodium lauryl sulphate was added to terminate the reaction. The absorbance at 598 nm was then measured. The above actions can be carried out in a single 4.5 ml 1 cm path cuvette.

A standard curve was produced by reacting dilutions of soybean lipoxygenase from Sigma-Aldrich, of certificated activity. This was used to calculate the activities of the extracts from the soybeans. Blank readings were subtracted, obtained using denatured enzyme extracts heated at 95°C for 30 minutes. One unit of activity is the increase of 0.001 absorbance units at 598 nm per minute from the hydroperoxidation of linoleic acid.

### Lactate concentrations:

Lactate concentrations were determined using a commercially available reflectometrical test (Lactic Acid Test, Merck

KGaA, 64271 Darmstadt, Germany). Samples were analysed in duplicate and mean values were taken.

### Viable counts:

The number of live bacteria in the cultures was determined by plate counting appropriate dilutions of samples containing *L. fermentum* on MRS agar and anaerobic incubation for 3 days at 37°C. *L. lactis* was enumerated using M17 agar and aerobic incubation for 3 days at 30°C.

Numbers are expressed as Colony forming units per ml of product (Cfu/ml).

### Example 1

A soybase was prepared by mixing 5.6% soy bean powder (Soy Supreme Fibre Reduced soy bean powder, SunOpta Grains and Food Group, Hope, MN, USA) in hot water (75-85°C). The powder had a lipoxygenase activity of less than 5 kU per milligram of soy powder and was hydrated for at least 15 minutes before addition of 2% sucrose, 1% glucose and 0.35% HM pectin. The mix was then pasteurised for 20 sec. at 72°C and homogenized at 150 bar. The soybase was kept at 5 °C until further use.

500 ml soy base was inoculated by adding 2% of a preculture of *Lb. fermentum LMG8154* (Laboratorium voor Microbiologie Gent, Universiteit Gent, Ghent, Belgium) at 30 °C. The mixture was incubated for 4 hrs at 30 °C during which the pH decreased from 6.7 to 6.5. The fermentation process was stopped by rapid cooling to 4 °C. Viable counts increased from 1.4x10⁷to 2.0x10⁷ Cfu/ml during fermentation. The lactic acid level was found to have increased to 0.26 g/l during fermentation.

An aliquot of the fermented sample and of the original soybase were subjected to SPME followed by GC-MS analysis. It was found that during fermentation the peak areas for pentanal, hexanal, heptanal, octanal, *trans*-2-hexenal, 2-methyl butanal and 3-methyl butanal had decreased considerably as shown in Table 1:

**Table 1**

| | Decrease in peak area (%) |
|---|---|
| n-pentanal | 87 |
| n-hexanal | 89 |
| n-heptanal | 78 |
| n-octanal | 56 |
| *trans*-2- hexenal | 63 |
| 2-methyl butanal | 42 |
| 3-methyl butanal | 46 |

The analyses further showed that during fermentation the concentration of diacetyl had increased by 1.4 ppm. No significant production of acetaldehyde was observed.

The fermented product and the non-fermented soy base were evaluated by an expert tasting panel (n=12). The fermented product was statistically significant reduced in soy odour and soy taste compared to the non-fermented product. Moreover the fermented product was characterised by a pleasant milky and creamy taste.

### Example 2

500 ml soy base was inoculated by adding 2% of a preculture of of *Lactococcus lactis subsp. cremoris H414* at 30 °C. This *L. lactis* strain is described in "Structure of the exopolysaccharide produced by Lactococcus-lactis subspecies cremoris H414 grown in a defined medium or skimmed-milk", by Gruter et al., Carbohydrate Research 231: 273-291 Jul. 2, (1992). The mixture was incubated for 4 hrs at 30 °C during which the pH decreased from 6.7 to 6.2. The fermentation process was stopped by rapid cooling to 4 °C. Viable counts increased from 1.1x10⁷ to 3.5x10⁷ Cfu/ml during fermentation. The lactic acid level was found to have increased to 0.54 g/l during fermentation.

An aliquot of the fermented sample and of the original soybase were subjected to SPME followed by GC-MS analysis. It was found that during fermentation the peak area for pentanal, hexanal, heptanal, octanal, *trans*-2-hexenal, 2-methyl butanal and 3-methyl butanal had decreased considerably as shown in Table 2:

**Table 2**

| | Decrease in peak area (%) |
|---|---|
| n-pentanal | 20 |
| n-hexanal | 32 |
| n-heptanal | 25 |
| n-octanal | 21 |
| *trans*-2- hexenal | 28 |
| 2-methyl butanal | 25 |
| 3-methyl butanal | 30 |

The analyses further showed that during fermentation the concentration of acetaldehyde had increased by 1.8 ppm. No significant production of diacetyl was observed.

### Example 3

A soybase was prepared by mixing 5.6% soy milk powder (Soy Supreme Fibre Reduced soy bean powder SunOpta Grains and Food Group, Hope, MN, USA) in hot water (75-85°C). The powder had a lipoxygenase activity of less than 5 kU per milligram of soy powder and was hydrated for at least 15 minutes before addition of 2% sucrose and 0.35% HM pectin. The mix was then pasteurised for 20 sec. at 72°C and homogenized at 180 bar. The soybase was kept at 5 °C until further use.

The base was inoculated as in Example 1, except that this time fermentation was continued until 24 hours after inoculation with *Lb. fermentum LMG8154.*

Concentrations of the following flavour volatiles were measured 5, 7, 9, 11 and 24 hours after inoculation:
- diacetyl
- n-pentanal
- n-hexanal
- n-heptanal

It was found that in the sample obtained after 24 hours fermentation diacetyl concentration was significantly lower than in the samples obtained after 7, 9 and 11 hours of fermentation. Furthermore, levels of n-pentanal, n-hexanal and n-heptanal in the 24 hrs sample were significantly increased relative to the concentration of the same aldehydes in the 11 hrs sample. In the 11 hrs sample the n-pentanal concentration was found to be about twice as high as in the 9 hrs sample.

These results show that fermentation times in excess of 11 hours adversely affect the flavour quality of the fermented product. For the *Lb. fermentum* strain used in this experiment optimum flavour quality was achieved after about 9 hours of fermentation.

## Claims

1. A method of fermenting a soy protein containing substrate, said method comprising:
- providing a pasteurised or sterilised aqueous liquid containing 0.5-8 wt.% of dissolved soy protein, 0-0.2 wt.% of dairy protein and less than 24 wt.% of solids;
- inoculating the pasteurised or sterilised liquid with a culture comprising a lactic acid bacteria strain selected from the group consisting of species of the genus *Lactococcus,* species of the genus *Leuconostoc,* mesophilic strains of the genus *Lactobacillus* having an optimum growth temperature below 35 °C and combinations thereof;
- fermenting the inoculated aqueous liquid by incubation at a temperature in the range of 20-40 °C for 0.5-11 hours to obtain a fermented product;
wherein at a temperature of 7 °C the fermented product has a viscosity of less than 50 mPa.s at 100 s⁻¹; and wherein during fermentation lactate concentration increases by not more than 600 ppm and the following changes in concentrations of flavour compounds occur:
• diacetyl concentration increases with at least 0.2 ppm and/or acetaldehyde concentration increases with at least 0.1 ppm;
• concentration of at least one C₅-C₉ n-alkanal decreases by at least 30% and/or concentration of *trans*-2-hexenal decreases by at least 30%.

2. Method according to claim 1, wherein the fermented product contains at least 0.3 ppm of diacetyl.

3. Method according to claim 1 or 2, wherein the fermented product contains at least 0.2 ppm of acetaldehyde.

4. Method according to any one of the preceding claims,
wherein during fermentation the n-pentanal concentration, the n-hexanal concentration, the n-heptanal concentration and/or the n-octanal concentration decreases by at least 50%, preferably by at least 70%.

5. Method according to any one of the preceding claims,
wherein during fermentation at least 3, more preferably at least 4 aldehydes selected from the group consisting of n-pentanal, n-hexanal, n-heptanal, n-octanal, n-nonanal and 2-trans-hexenal are reduced by at least 50%.

6. Method according to any one of the preceding claims,
wherein during fermentation the 2-trans-hexenal concentration decreases by at least 30%, preferably by at least 50%.

7. Method according to any one of the preceding claims,
wherein during fermentation concentration of 2-methyl butanal and/or 3-methylbutanal decreases by at least 25%.

8. Method according to any one of the preceding claims,
wherein the inoculated liquid is fermented for less than 10 hours, preferably for 1-6 hours.

9. Method according to any one of the preceding claims, wherein the mesophilic strain of the genus *Lactobacillus* is selected from the group consisting of *Lactobacillus brevis, Lactobacillus fermentum, Lactobacillus sake* and combinations thereof.

10. Method according to any one of the preceding claims, wherein the culture comprises a lactic acid bacteria strain selected from the group consisting of *Lactobacillus fermentum, Lactobacillus plantarum, Lactococcus lactis, Lactococcus cremoris, Leuconostoc mesenteroides, Leuconostoc cremoris, Leuconostoc lactis* and combinations thereof.

11. Method according to any one of the preceding claims, wherein the fermentation is carried out at a temperature within the range of 20-35 °C, preferably of 25-35 °C.

12. Method according to any one of the preceding claims, wherein the pasteurised or sterilised aqueous liquid contains less than 15 wt.% of solids

## Patentansprüche

1. Verfahren zum Fermentieren eines Sojaprotein enthaltenden Substrats, wobei das Verfahren umfasst:
- Bereitstellen einer pasteurisierten oder sterilisierten wässrigen Flüssigkeit, die 0,5-8 Gewichts-% gelöstes Sojaprotein, 0-0,2 Gewichts-% Milchprotein und weniger als 24 Gewichts-% Feststoffe enthält;
- Impfen der pasteurisierten oder sterilisierten Flüssigkeit mit einer Kultur, die einen Milchsäurebakterienstamm umfasst, der ausgewählt ist aus der Gruppe, bestehend aus Spezies der Gattung *Lactococcus,* Spezies der Gattung *Leuconostoc,* mesophilen Stämmen der Gattung *Lactobacillus,* mit einem Optimum der Wachstumstemperatur unter 35 °C und Kombinationen davon;
- Fermentieren der geimpften wässrigen Flüssigkeit durch Inkubation bei einer Temperatur im Bereich von 20-40 °C für 0,5-11 Stunden unter Erhalt eines fermentierten Produkts;
wobei das fermentierte Produkt bei einer Temperatur von 7 °C eine Viskosität von kleiner als 50 mPa.s bei 100 s⁻¹ hat und wobei während einer Fermentation die Lactat-Konzentration um nicht mehr als 600 ppm ansteigt und die folgenden Änderungen in den Konzentrationen von Aromaverbindungen auftreten:
• Diacetyl-Konzentration steigt um wenigstens 0,2 ppm und/oder Acetaldehyd-Konzentration steigt um wenigstens 0,1 ppm;
• Konzentration von wenigstens einem C₅-C₉-n-Alkanal nimmt um wenigstens 30 % ab und/oder Konzentration von trans-2-Hexenal nimmt um wenigstens 30 % ab.

2. Verfahren gemäß Anspruch 1, wobei das fermentierte Produkt wenigstens 0,3 ppm Diacetyl enthält.

3. Verfahren gemäß Anspruch 1 oder 2, wobei das fermentierte Produkt wenigstens 0,2 ppm Acetaldehyd enthält.

4. Verfahren gemäß einem der vorangehenden Ansprüche, wobei die n-Pentanal-Konzentration, die n-Hexanal-Konzentration, die n-Heptanal-Konzentration und/oder die n-Octanal-Konzentration während der Fermentation um wenigstens 50 %, vorzugsweise um wenigstens 70 %, abnimmt.

5. Verfahren gemäß einem der vorangehenden Ansprüche, wobei wenigstens 3, bevorzugter wenigstens 4 Aldehyde, ausgewählt aus der Gruppe, bestehend aus n-Pentanal, n-Hexanal, n-Heptanal, n-Octanal, n-Nonanal und 2-trans-Hexenal während der Fermentation um wenigstens 50 % reduziert werden.

6. Verfahren gemäß einem der vorangehenden Ansprüche, wobei die 2-trans-Hexenal-Konzentration während der Fermentation um wenigstens 30 %, vorzugsweise um wenigstens 50 %, abnimmt.

7. Verfahren gemäß einem der vorangehenden Ansprüche, wobei die Konzentration an 2-Methylbutanal und/oder 3-Methylbutanal während der Fermentation um wenigstens 25 % abnimmt.

8. Verfahren gemäß einem der vorangehenden Ansprüche, wobei die geimpfte Flüssigkeit für weniger als 10 Stunden, vorzugsweise für 1-6 Stunden, fermentiert wird.

9. Verfahren gemäß einem der vorangehenden Ansprüche, wobei der mesophile Stamm der Gattung Lactobacillus aus der Gruppe, bestehend aus *Lactobacillus brevis, Lactobacillus fermentum, Lactobacillus sake* und Kombinationen davon, ausgewählt wird.

10. Verfahren gemäß einem der vorangehenden Ansprüche, wobei die Kultur einen Milchsäure-Bakterienstamm, ausgewählt aus der Gruppe, bestehend aus *Lactobacillus fermentum, Lactobacillus plantarum, Lactobacillus lactis, Lactococcus cremoris, Leuconostoc mesenteroides, Leuconostoc cremoris, Leuconostoc lactis* und Kombinationen davon, ausgewählt wird.

11. Verfahren gemäß einem der vorangehenden Ansprüche, wobei die Fermentation bei einer Temperatur innerhalb des Bereichs von 20-35 °C, vorzugsweise von 25-35 °C, durchgeführt wird.

12. Verfahren gemäß einem der vorangehenden Ansprüche, wobei die pasteurisierte oder sterilisierte wässrige Flüssigkeit weniger als 15 Gewichts-% Feststoffe enthält.

## Revendications

1. Méthode de fermentation d'un substrat contenant de la protéine de soja, ladite méthode comprenant :
- la fourniture d'un liquide aqueux pasteurisé ou stérilisé contenant 0,5 à 8 % en poids de protéine de soja dissoute, 0 à 0,2 % en poids de protéine du lait et moins de 24 % en poids de matière solide ;
- l'inoculation du liquide pasteurisé ou stérilisé avec une culture comprenant une souche de bactéries lactiques choisie dans le groupe consistué par les espèce du genre *Lactococcus,* les espèces du genre *Leuconostoc,* les souches mésophiles du genre *Lactobacillus* ayant une température de croissance optimale inférieure à 35°C et leurs combinaisons ;
- la fermentation du liquide aqueux inoculé par incubation à une température dans la plage de 20 à 40°C pendant 0,5 à 11 heures pour obtenir un produit fermenté ;
où à une température de 7°C, le produit fermenté a une viscosité inférieure à 50 mPa.s à 100 s⁻¹ ; et où pendant la fermentation, la concentration en lactate augmente de pas plus de 600 ppm et les changements suivants dans les concentrations en composés aromatisants se produisent :
- la concentration en diacétyle augmente avec au moins 0,2 ppm et/ou la concentration en acétaldéhyde augmente avec au moins 0,1 ppm ;
- la concentration d'au moins un n-alcanal en C₅ à C₉ diminue d'au moins 30 % et/ou la concentration en *trans*-2-hexénal diminue d'au moins 30 %.

2. Méthode selon la revendication 1, dans laquelle le produit fermenté contient au moins 0,3 ppm de diacétyle.

3. Méthode selon la revendication 1 ou 2, dans laquelle le produit fermenté contient au moins 0,2 ppm d'acétaldéhyde.

4. Méthode selon l'une quelconque des revendications précédentes, dans laquelle pendant la fermentation, la concentration en n-pentanal, la concentration en n-hexanal, la concentration en n-heptanal et/ou la concentration en n-octanal diminuent d'au moins 50 %, de préférence d'au moins 70 %.

5. Méthode selon l'une quelconque des revendications précédentes, dans laquelle pendant la fermentation, au moins 3, de manière davantage préférée au moins 4 aldéhydes choisis dans le groupe consistué par le n-pentanal, le n-hexanal, le n-heptanal, le n-octanal, le n-nonanal et le 2-trans-hexénal sont réduits d'au moins 50 %.

6. Méthode selon l'une quelconque des revendications précédentes, dans laquelle pendant la fermentation, la concentration en 2-trans-hexénal diminue d'au moins 30 %, de préférence d'au moins 50 %.

7. Méthode selon l'une quelconque des revendications précédentes, dans laquelle pendant la fermentation, la concentration en 2-méthylbutanal et/ou en 3-méthylbutanal diminue d'au moins 25 %.

8. Méthode selon l'une quelconque des revendications précédentes, dans laquelle le liquide inoculé est fermenté pendant moins de 10 heures, de préférence pendant 1 à 6 heures.

9. Méthode selon l'une quelconque des revendications précédentes, dans laquelle la souche mésophile du genre *Lactobacillus* est choisie dans le groupe consistué par *Lactobacillus brevis, Lactobacillus fermentum, Lactobacillus sake* et leurs combinaisons.

10. Méthode selon l'une quelconque des revendications précédentes, dans laquelle la culture comprend une souche de bactéries lactiques choisie dans le groupe consistué par *Lactobacillus fermentum, Lactobacillus plantarum, Lactococcus lactis, Lactococcus cremoris, Leuconostoc mesenteroides, Leuconostoc cremoris, Leuconostoc lactis* et leurs combinaisons.

11. Méthode selon l'une quelconque des revendications précédentes, dans laquelle la fermentation est réalisée à une température dans la plage de 20 à 35°C, de préférence de 25 à 35°C.

12. Méthode selon l'une quelconque des revendications précédentes, dans laquelle le liquide aqueux pasteurisé ou stérilisé contient moins de 15 % en poids de matière solide.
